# EUROPEAN PATENT SPECIFICATION

(11) **EP 1 376 445 B1**
(45) Date of publication and mention of the grant of the patent: **19.04.2006**
(21) Application number: 03020341.8
(22) Date of filing: 13.07.1999
(51) Int. Cl.: G06K 7/00, G08B 13/24

(54) **Low noise signal generator for use with an RFID system**
Rauscharmer Signalgenerator zur Verwendung in einem RFID System
Générateur de signal à faible bruit pour un système d'identification par radiofréquences (RFID)

(30) Priority: 24.07.1998 US 122121; 24.07.1998 US 122310
(43) Date of publication of application: 02.01.2004
(62) Divisional of application: 99935548.0
(73) Proprietor: CHECKPOINT SYSTEMS, INC., Thorofare, NJ 08086 (US)
(72) Inventor: Gallagher, William F. III, Phoenixville, PA 19460 (US); Eckstein, Eric, Merion Station, PA 19066 (US); Barber, Russell E., Scotts Valley, CA 95066 (US)
(74) Representative: Menges, Rolf

(56) References cited:
- EP-A- 0 352 513
- EP-A- 0 431 341
- WO-A-92/22045
- GB-A- 2 253 083
- US-A- 5 664 157

## Description

The invention concerns a radio frequency identification (RFID) system having a detection zone for detecting the presence of a resonant tag in the detection zone. The radio frequency identification system comprises a signal generator for generating digital transmitter signals, and a transmitter antenna that emits an electromagnetic signal into the detection zone when driven by transmitter antenna drive signals.

Radio frequency identification (RFID) systems are used to detect and prevent inventory shrinkage and to perform inventory management functions in a variety of retail establishments, apparel and mass merchandisers, supermarkets, libraries, video stores, and the like. In general, such systems use an intelligent tag which is secured to or associated with an article (or its packaging), typically an article which is readily accessible to potential customers or facility users. The process wherein intelligent tags are secured to or associated with an article (or its packaging) is often referred to as "tagging" the article. In general, such RFID systems are employed for detecting the presence (or the absence) of a unique intelligent tag and, thus, a protected article within a surveilled security area or detection zone, also referred to herein as an "interrogation zone." The detection zone is located at or around an exit or entrance to the facility or a portion of the facility, at the point of sale, or proximate to a hand-held, portable interrogator.

One type of RFID system which has gained widespread popularity uses an intelligent tag which includes a self-contained, passive resonant circuit in the form of a small, generally planar printed circuit which resonates at a predetermined detection frequency within a detection frequency range. A transmitter, which is also tuned to the detection frequency, transmits electromagnetic energy or an interrogation signal into the detection zone. A receiver, tuned to the detection frequency detects amplitude disturbances on the electromagnetic field that are imparted by the intelligent tag. When an article having an attached intelligent tag moves into or passes through the detection zone, the intelligent tag is exposed to the transmitted energy. That is, the intelligent tag is interrogated. The detection of such an output signal by the receiver indicates the presence of an article with an intelligent tag within the detection zone and the receiver activates an alarm to alert appropriate security or other personnel.

One well-known RFID system has a transmitting and detecting frequency in the radio frequency range. The intelligent tags used with such systems are referred to as RF tags or RF intelligent tags. The RF tags associated with each article may be identical so that all articles having an intelligent tag, regardless of article size or value, return an identical signal to the receiver. Alternatively, the RF tags may be passive resonant intelligent tags which return unique identification codes. US-A-5,446,447 US-A-5 430 441, and US-A-5 347 263 disclose three examples of such intelligent tags. These intelligent tags typically include an integrated circuit to generate a unique identification code. Such "intelligent" intelligent tags provide additional information about the article detected in the zone of the interrogator. These intelligent tags typically respond to, and transmit signals, in the radio frequency range, and are known in the art as "radio frequency identification (RFID) tags or "intelligent tags." RFID tags are used in RFID systems. intelligent tags may also resonate at non-RF frequency bands, and may be referred generically as "EAS markers."

Existing RFID systems of the type described above and of other types have been shown to be effective in preventing the theft or unauthorized removal of articles.

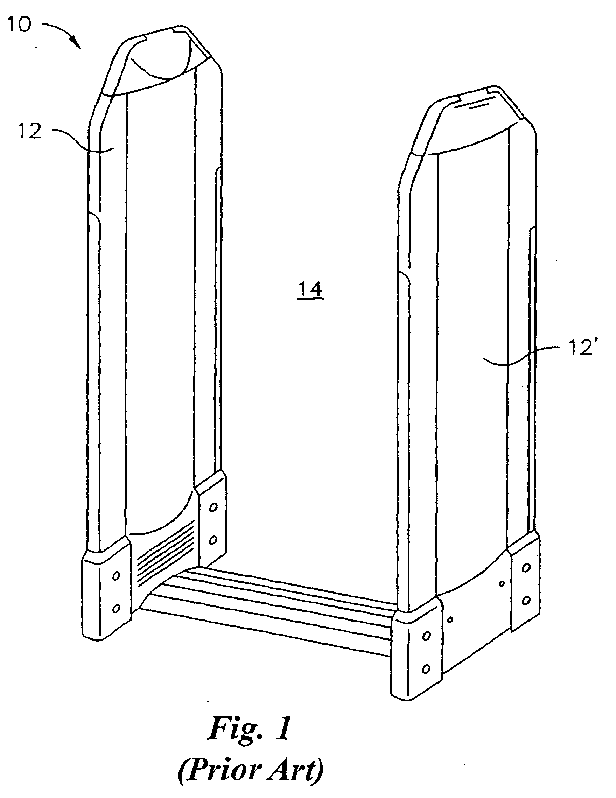

Fig. 1 shows a conventional transceiver assembly **10** of an RFID system. The assembly includes a pair of spaced pedestal transceiver antennas **12** and **12'** which define a detection zone 14 therebetween. In one conventional scheme, transmitter and receiver coils are placed in each of the antennas **12** and **12'.** In another conventional scheme, a transmitter coil is placed in the antenna **12** and a receiver coil is placed in the antenna **12'**. The maximum size of the detection zone **14** depends largely upon the "read range" of the intelligent tags used in the RFID system. The "read range" is the range in which a passive resonant signal can be accurately detected and discriminated by the signal receiving apparatus.

Passive resonant signals are relatively low power signals and must be discriminated within a relatively noisy environment. There are many sources of potential noise in the detection zone **14**, such as signals from other intelligent tags, signals generated by interaction of the transmitter frequencies with metal objects and neighboring electrical equipment. Furthermore, the RFID system itself is a significant source of noise.

In the RFID system, significant amplitude and phase noise are produced from the oscillator used to generate the fundamental field frequency of the transmitter loop antenna. Furthermore, significant amounts of noise travels on the signal path between the transceiver electronics and the circuitry for processing the analog tag signals. This signal path is hardwired in conventional RFID systems. See, for example, US-A-4 623 877. Ground loops and common mode signals introduce noise along this signal path. Switching noise from digital signal processing (DSP) circuitry for processing the analog tag signals is often found on the signal path. DC power lines which supply power to the transceiver electronics and to the circuitry for processing the analog tag signals also introduce noise on the signal path.

Such noise decreases the signal-to-noise ratio of the tag response signal and thereby limits the read range. The noise problem gets worse as the antennas 12 and 12' are moved further apart, since the tag signal weakens with distance from the receiver antenna, whereas potential environmental noise sources increase with distance from the receiver antenna. Furthermore, governmental authorities, such as the Federal Communications Commission (FCC), regulate radiation emission levels in the frequency range used by RFID systems and do not allow emission levels to exceed maximum predetermined levels. This further limits the strength of the signals allowed in the detection zone, thereby constraining the read range. Many conventional RFID systems currently operate at or near the FCC limits.

Conventional RFID systems experience tag reading problems even when the read range is an acceptable value. For example, the signal from one particular intelligent tag may be missed due to unexpected noise in the detection zone or due to a low signal-to-noise ratio as a result of a weak or significantly attenuated tag response signal. Thus, conventional RFID systems sometimes fail to "hear" small signals, or even normal strength signals when the environment is unusually noisy.

Typically, the spacing between the transceiver antennas 12 and 12' is in the range of from three to six feet depending upon the particular RFID system and the particular application in which the system is employed. However, to avoid inhibiting the entry/exit to a store, it is desirable that the antennas be spaced from each other by at least the width of the entry/exit, which may be six feet or greater in some types of stores (e.g., home centers). It is also sometimes desirable to hide the antenna apparatus. However, it is not feasible to hide the antenna apparatus if the antennas must be a very close to each other to obtain acceptable performance. Thus, antenna placement options are constrained in conventional RFID systems.

One scheme for increasing the read range of an RFID system is described in US-A-5 914 692. However, this scheme addresses the antenna design, and does not address the problem of noise generated by the RFID system itself, and by other external noise sources.

In sum, there is a significant, long-felt and presently unmet need to improve the detection capabilities and read range of RFID system electronics without violating governmental regulations on field strength.

The present invention fulfills this need by providing an RFID system which significantly reduces background noise produced by external/environmental sources and internal RFID system components, thereby providing an RFID system which has an improved read range, and which can hear weaker signals.

The present invention provides an RFID system as initially described which includes a switched amplifier that is connected to the flip-flop of the signal generator and compled to the transmitter antenna, wherein the digital transmitter signals are passed through the switched amplifier for creating the transmitter antenna drive signals.

This noise reduction scheme improves tag detection and allows for a significantly increased read range. The present invention thus addresses a long-felt, and heretofore, unmet need in the industry for an RFID system with such improved capabilities.

The features of the preamble of claim 1 are known in combination from WO-A-92/22045.

The foregoing summary, as well as the following detailed description of preferred embodiments of the invention, will be better understood when read in conjunction with the appended drawings. For the purpose of illustrating the invention, there are shown in the drawings embodiments which are presently preferred. It should be understood, however, that the invention is not limited to the precise arrangements and instrumentalities shown. In the drawings:
Fig. 1 is a perspective view of pedestal antennas of a conventional RFID system;
Fig. 2 is a schematic block diagram of selected components of an RFID system in accordance with the present invention;

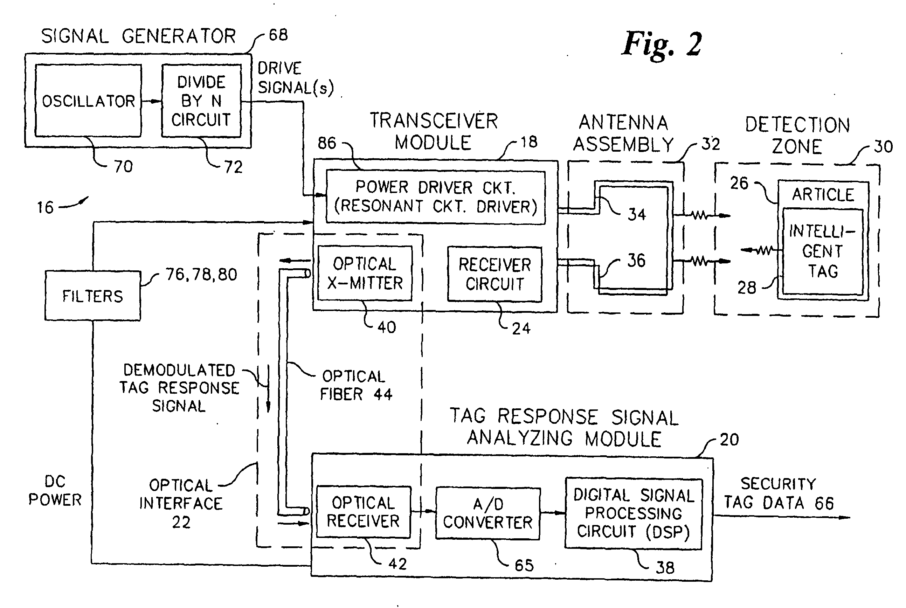

Figs. 3A-1, 3A-2, 3A-3, 3A-4 and 3B, taken together, is a combination detailed component level circuit diagram/schematic block diagram showing the individual components of the RFID system of Fig. 2, as well as additional components of an RFID system in accordance with the present invention;

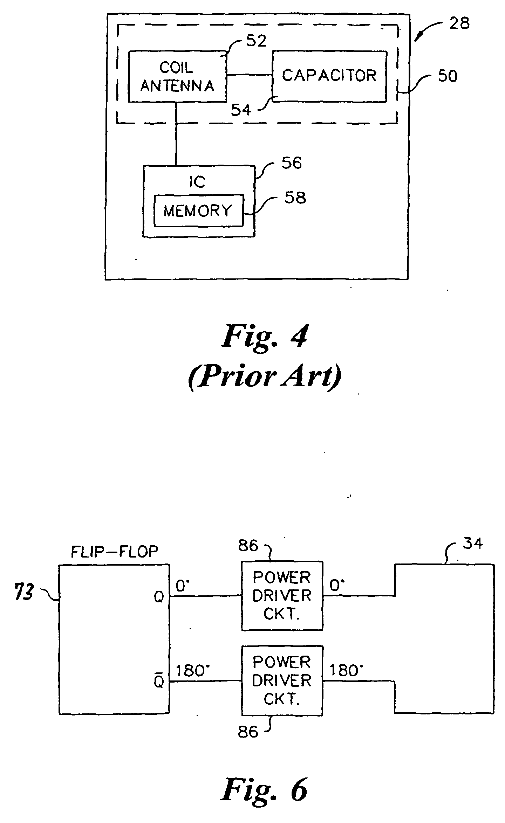

Fig. 4 is a schematic block diagram of an intelligent tag suitable for use with the present invention;

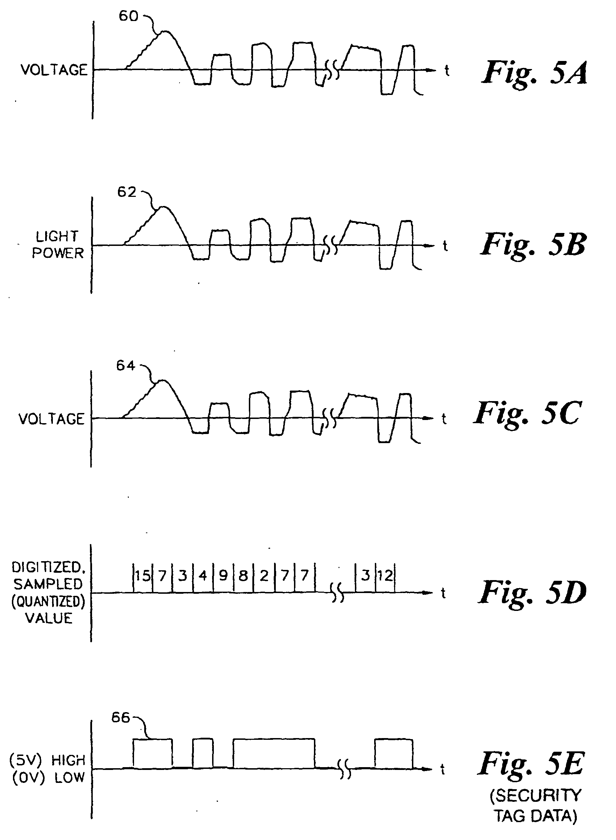

Figs. 5A-5E are tag response signals at different stages in the system of Figs. 3A-1, 3A-2, 3A-3, 3A-4 and 3B;

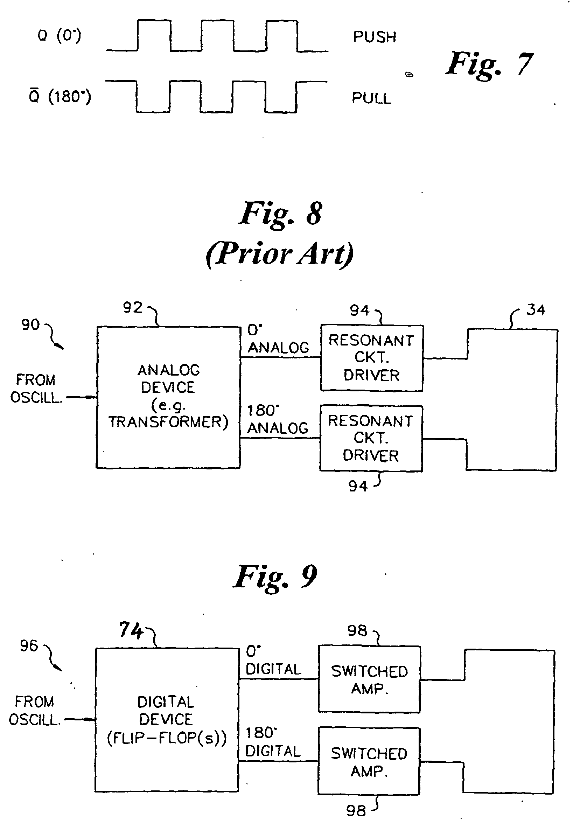

Fig. 6 is a simplified circuit diagram of a portion of Figs. 3A-1, 3A-2, 3A-3, 3A-4 and 3B;
Fig. 7 is a diagram of the outputs of a flip-flop in Fig. 6;
Fig. 8 is a schematic block diagram of a conventional scheme for producing phase split signals to drive an RFID transmitter antenna; and
Fig. 9 is a schematic block diagram of a scheme for producing phase split signals to drive an RFID transmitter antenna in accordance with the present invention.

### DETAILED DESCRIPTION OF THE INVENTION

Certain terminology is used herein for convenience only and is not to be taken as a limitation on the present invention. In the drawings, the same reference numerals are employed for designating the same elements throughout the several figures.

The system architecture of the RFID system in the present invention includes a plurality of elements for reducing noise within the RFID system. The resultant RFID system has better detection capabilities, or equivalently, a greater read range for RFID tags. Key elements are summarized herein as follows:
1. Fiber optics are used to communicate analog tag response signals from the output of the receiver circuit to the input of the tag response signal analyzing circuitry (which includes a digital signal processor (DSP)). Generally speaking, the system architecture is thus physically separated into analog and digital sections. The fiber optics creates electrical isolation between the two sections, breaking ground loops, stopping internal switching noise from the DSP from entering the sensitive front end detector (i.e., the receiver circuitry), and preventing common mode signals from interfering with the desired RFID tag signal.
2. Filtering is provided on the DC power lines which prevents extraneous signals, either internal or external, from interfering with desired tag signals. The filtering is targeted toward high and low frequency interference, which may be common mode or differential.

Each of these elements significantly reduces noise, and in a particular embodiment of the present invention the first element may also be used in combination with the second element in the RFID system. A detailed explanation of each of the elements is provided below.

Fig. 2 is a schematic block diagram of selected portions of an RFID system 16 depicted to selectively highlight the three above-identified elements. Figs. 3A-1, 3A-2, 3A-3, 3A-4 and 3B, taken together, provide a combination expanded, component level circuit diagram/schematic block diagram of one preferred embodiment of the RFID system 16 having the selected portions shown in Fig. 2, as well as additional portions. The circuit components of Figs. 3A-1, 3A-2, 3A-3, 3A-4 and 3B are described in conjunction with the elements of Fig. 2.

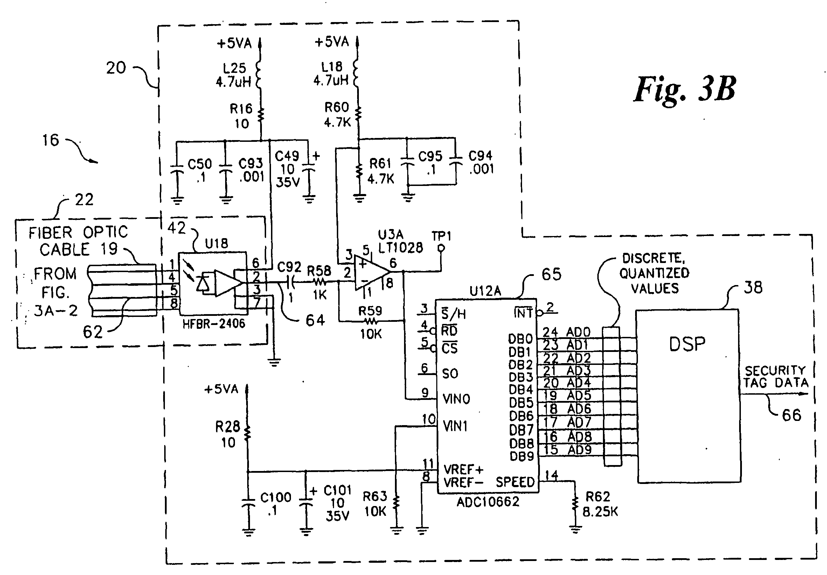

Referring to Figs. 2, 3A-1, 3A-2, 3A-3, 3A-4, 3B and 4, the system 16 includes a transceiver module 18 (Figs. 3A-1, 3A-2, 3A-3 and 3A-4), a tag response signal analyzing module 20 (Fig. 3B) and an optical interface 22 in the form of an optical fiber interface (Figs. 3A-1, 3A-2, 3A-3, 3A-4 and 3B). The transceiver module 18 includes a conventional receiver circuit 24 having an AM receiver. The receiver circuit 24 demodulates the data from the intelligent tag 28 (Fig. 4). Amplitude perturbations on the RF carrier are detected, amplified and limited by coupling energy directly from the receiver antenna. Detection, amplification and limiting are thus performed in the receiver circuit 24. The receiver circuit 24 outputs a demodulated tag response signal upon detecting an article 26 tagged with an intelligent tag 28 in a detection zone 30. The transceiver module 18 is connected to a conventional transmitter/receiver antenna assembly 32 which includes a transmitter loop antenna 34 for creating a detection zone and a receiver loop antenna 36 for picking up response signals transmitted from one or more intelligent tags 28. The antennas 34 and 36 may be separated, or may be colocated (i.e., both, arranged on the same physical antenna). The transceiver module 18 is placed in close proximity to the driven antenna element(s). The antenna assembly 32 may be arranged as shown in Fig. 1 or in any other conventional manner. The transmitter loop antenna 36 has a predetermined fundamental field frequency. In the example described herein, the frequency is 13.56 MHz. However, the scope of the invention includes any frequency which is suitable for detecting resonant intelligent tags.

The tag response signal analyzing module 20 may be located in close proximity to the antenna assembly 32 and transceiver module 18, or it may be located remotely with respect to the antenna assembly 32 and transceiver module 18. The tag response signal analyzing module 20 includes an optical input, an A/D converter 65, and a conventional digital signal processing circuit 38 (hereafter, digital signal processor 38 or DSP 38) which processes the digitized and quantized analog tag response signal-and outputs intelligent tag data therefrom. The DSP 38 is preferably housed in a shielded box.

One important element is the optical interface 22 which is used in place of a conventional hardwired interface. The optical interface 22 includes an optical transmitter 40, an optical receiver 42 and a fiber optic cable or optical fiber 44 connected at one end to the optical transmitter 40 and connected at the other end to the optical receiver 42. The optical transmitter 40 and optical receiver 42 may be physically mounted on respective boards associated with the transceiver module 18 and tag response signal analyzing module 20 as shown in Figs. 2, 3A-1, 3A-2, 3A-3, 3A-4 and 3B, or they may be external to the boards associated with the transceiver module 18 and tag response signal analyzing module 20 (not shown). The optical fiber 44 may be any suitable length for connecting the respective boards, and may have one or more repeaters or optical amplifiers connected along its path, if necessary to maintain signal strength. As discussed above, the optical fiber 44 significantly reduces noise in the tag response signal by providing electrical isolation and breaking ground loops associated with hardwired connections, stopping internal switching noise from the DSP 38 from entering the receiver circuit 24, and preventing common mode signals from interfering with the desired tag response signal.

Experimental data shows that using an optical interface instead of a conventional hardwired interface provides noise voltage reduction of an order of magnitude, or 20 decibels (db). Due to the significant noise reduction, the read range may be increased by a significant percentage compared to prior art RFID systems having a hardwired interface, on the order of at least six inches to one foot per interrogator. For example, a store entrance/exit having two interrogators would have a one to two foot aisle width improvement, each interrogator providing an extra six inches to one foot improvement in read range.

The preferred resonant intelligent tag for use with the present invention is a conventional RFID tag.

Fig. 4 shows general details of a sample RFID tag **28** suitable for use with the present invention. The intelligent tag **28** includes a passive resonant radio frequency (RF) circuit **50** for detecting when the tag **28** is within a zone monitored by a reader or interrogator, as is well known in the art. One well-known type of circuit **50** has a coil antenna **52** and a capacitor **54** which together form a resonant circuit with a predetermined (operational) resonant frequency (i.e., the selected radio frequency). Power for the intelligent tag **28** is derived from the antenna **52** in a conventional manner. Furthermore, the intelligent tag **28** includes an integrated circuit (IC) **56** for providing "intelligence" to the intelligent tag **28.** The IC **56** is connected to the circuit **50.** The IC 56 includes a programmable memory **58,** as described below, for storing bits of identification or other data. The IC **56** outputs a data stream comprising stored data when sufficient power is applied thereto. In one embodiment of the invention, the data stream creates a series of data pulses by switching an extra capacitor (not shown) across the coil antenna **52** for the duration of the data pulses. This changes the resonant frequency of the RF circuit **50,** detuning it from the operational frequency. Thus, instead of the RF circuit **50** returning a simple response signal at a single operational resonant frequency, it returns a modulated signal containing a packet of preprogrammed information from the memory **58.** The packet of information (data pulses) is received and processed by interrogator receiving circuitry and is decoded (if necessary) to provide identification and/or other information about the tagged article. Other methods of using the data in the IC memory **58** to output identification data from the intelligent tag **28** are within the scope of the invention. The IC 56 is preferably also a passive device and is powered in the same manner as the RF circuit **50** (i.e., by using energy received at the antenna **52** from the interrogator transmitter signal). The intelligent tag **28** is thus a so-called RFID tag. Other types of RFID tags may be used with the present invention. Examples of other RFID tags which have circuitry suitable for use as part of the circuitry of the intelligent tag **28** are shown in US-A-5 446 447 US-A-5 430 441 and US-A-5 347 263

Figs. 5A-5E show sample tag response signals originating from.the intelligent tag **28** at the different stages of the circuit elements of Figs. 2, 3A-1, 3A-2, 3A-3, 3A-4 and 3B.

Fig. 5A shows a portion of the unprocessed demodulated analog tag response signal at the output of the receiver circuit **24,** labeled in Figs. 3A-1, 3A-2, 3A-3, 3A-4 and Fig. 5A as signal **60.** A typical analog tag response signal may have 154 bits and a peak voltage level in the range of about 50 millivolts. The signal is "analog" because it has a continuously variable voltage level and noise, compared to a digital signal which has clearly defined discrete values (e.g., 1, 2, 3,...) which are ultimately expressed in groups of bits, and are represented by high and low logic levels.

Fig. 5B shows a portion of the tag response signal as it appears in the optical fiber 44 and after being processed by the optical transmitter 40. The tag response signal at this stage is labeled in Figs. 3A-1, 3A-2, 3A-3, 3A-4 and 3B, and in Fig. 5B as signal 62. The signal 62 has the same waveform as the signal 60, but the amplitude represents light intensity, not voltage.

Fig. 5C shows a portion of the tag response signal as it appears at the output of the optical receiver 42 and before being input into the tag response signal analyzing module 20. The tag response signal at this stage is labeled in Fig. 3B and Fig. 5C as signal 64. The signal 64 has the same waveform as the signal 62, but the amplitude now represents an analog electrical voltage. The signal 64 is thus identical to the signal 60, assuming ideally operating conversion circuitry and a lossless optical fiber 44. The analog electrical voltage is quantized in an A/D converter 65 shown in Fig. 3B which converts the analog voltage to digital data for processing by the DSP 38. In the circuit shown in Fig. 3B, the signal at the output of the A/D converter 65 is a sequence of 10 bit words, represented in Fig. 5D as discrete, quantized values of the signal 64 which are input into the DSP 38.

Fig. 5E shows a portion of the intelligent tag data output from the DSP 38. This data provides the identification information of the intelligent tag 28 (e.g., RFID tag data in the case wherein the intelligent tag **28** is an RFID tag). The tag output signal is labeled in Fig. 3B and Fig. 5E as signal **66.**

The quantized and digitized values and digital waveform shown in Figs. 5D and 5E do not represent the signals shown in Figs. 5A-5C at the same respective points in time, nor are the time periods in Figs. 5D and 5E correlated with each other or with the time periods of Figs. 5A-5C. Figs. 5D and 5E are provided to illustrate the digital characteristics of a tag response signal, compared to the analog nature of the signal in Figs. 5A-5C.

Some conventional RFID systems use fiber optics to transmit signals between system components. For example, US-A-5 288 980 discloses that the communication link between an electronic data processor and a pass/not pass logic circuit may be a fiber optic cable. US-A- 5 440 300 discloses a multiple embedded structure network wherein several smart structures embedded within panels are powered and interrogated by a network of conformal powering and data reception interrogation interface units which are connected by and serve as nodes along a common power/data bus cable. The cable may be a fiber optic cable . US-A-5 353 011 discloses the use of fiber optic drivers, cables and receivers to distribute synchronization signals associated with phased local oscillators. In all three patents, only digital signals flow through the fiber optics. None of these three patents transmit unprocessed, analog tag response signals over the respective fiber optic media, and thus none of these patents provide the above-noted noise reducing advantages.

Figs. 2, 3A-1, 3A-2, 3A-3, 3A-4 and 3B also show the second highlighted noise-reducing element in accordance with the present invention, namely a low noise signal generator 68 and a power driver circuit 86 for driving the transmitter of the antenna assembly **32** at its fundamental field frequency. The signal generator includes an oscillator **70** having an output frequency which is an integer multiple n of the fundamental field frequency, and a frequency divider **72** (hereafter, "divide by n circuit **72"**) connected to the oscillator output, wherein n ≥ 2. The output of the signal generator **68** is used to drive the transmitter of the antenna assembly **32** with the n-divided oscillator frequency. Specifically, the output of the signal generator **68** is connected to a resonant circuit driver or power driver circuit **86,** which, in turn, drives the transmitter antenna **34.** One preferred power driver circuit **86** is a type of Class E amplifier disclosed in EP-A-1 012 803. One embodiment of such a power driver circuit **86** is shown in Figs. 3A-1, 3A-2, 3A-3 and 3A-4. However, the scope of the invention includes any suitable switched amplifier which accepts a digital input, including conventional Class C, D or E amplifiers.

The oscillator 70 may be mounted to the transceiver module **18** as shown in Figs. 3A-1, 3A-2, 3A-3 and 3A-4, or the oscillator 70 may be external to the transceiver module **18** (not shown). In the external configuration, the oscillator output may be received by fiber optic circuitry **76.** If so, the transceiver module **18** uses circuitry **77** to sense a "drop out," or an absence of the external oscillator, to synchronize to neighboring transceiver modules **18,** either in phase by using jumper J5, or 180 degrees out of phase by using jumper J4.

Figs. 3A-1, 3A-2, 3A-3 and 3A-4 shows a preferred embodiment of the present invention wherein the divide by n circuit **72** is implemented with one or more cascaded toggle flip-flops. In Figs. 3A-1, 3A-2, 3A-3 and 3A-4, n=2, so there is only one flip-flop. The field frequency is 13.56 MHz in the illustrated example. Accordingly, an oscillator **70** is chosen which has an output frequency of 27.12 MHz. To simplify the circuit implementation, n is preferably an even number. In this manner, multiple flip-flops may be cascaded to create divide by 4, 6, 8, etc... circuits. The flip-flop output signals are obtained from the Q and Q outputs of the final stage flip-flop. If n is an odd number, the circuit implementation is more complicated. One odd number implementation uses a counter and decoder to decode counter outputs. The scope of the invention includes values of n ≥ 2. A practical range of values for n is 16 ≥ n ≥ 2.

The theory behind the noise reducing function of the signal generator **68** is that a frequency divider attenuates noise power in the drive signal but does not attenuate the signal power of the drive signal. Consider the example wherein n=2. After the oscillator output signal is fed through a divide by 2 circuit, the amplitude of the phase noise sidebands at any given frequency offset are divided in half, whereas the amplitude of the signal portion is not divided. If the noise in the drive signal at a particular frequency offset is σ_{DS}, then the resultant noise in the drive signal after being fed through the divide by 2 circuit is ½ σ_{DS} at the same frequency offset. The same principle applies if n is greater than 2. For example, if n=3, then the resultant noise is 1/3 σ_{DS}.

The low noise oscillator scheme described above significantly reduces noise in the RF field, thereby allowing the read range to be increased by a significant percentage compared to prior art RFID systems which do not use any such scheme. For example, a 10-20% improvement in detectability may be achieved using this scheme.

Figs. 2 and 3A-1, 3A-2, 3A-3 and 3A-4 also show the third highlighted noise-reducing element, namely the use of filtering on the DC power lines. The tag response signal analyzing module **20** provides isolated DC power to the transceiver module **18,** which, in turn, uses the DC power to synthesize and drive RF currents in the transmitter antenna **34** at the fundamental field frequency. The DC power lines for the transceiver **module 18** contain high and low frequency common mode filters **75** and **78,** and high and low frequency differential mode suppression filters **80.**

Figs. 3A-1, 3A-2, 3A-3 and 3A-4 also shows voltage regulators **82** and **84** for powering the circuits of the RFID system **16.**

Fig. 6 is a simplified circuit diagram which highlights portions of the preferred embodiment of the present invention wherein one or more toggle flip-flops 72 (one flip-flop in the illustrated divide by 2 embodiment) provide the dual function of (1) frequency dividing, and (2) providing non-phase inverted and phase inverted output signals to drive a transmitter. (The circuitry of Fig. 6 is shown in detail in Figs. 3A-1, 3A-2, 3A-3 and 3A-4.)

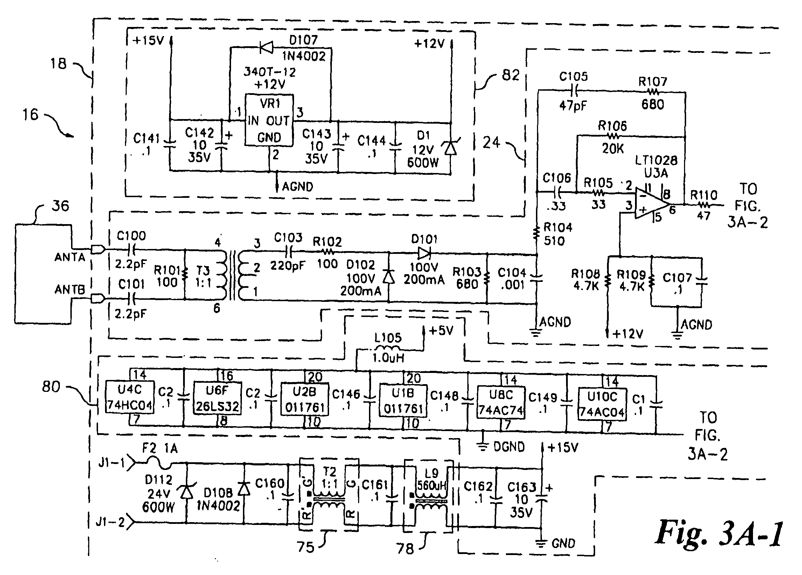

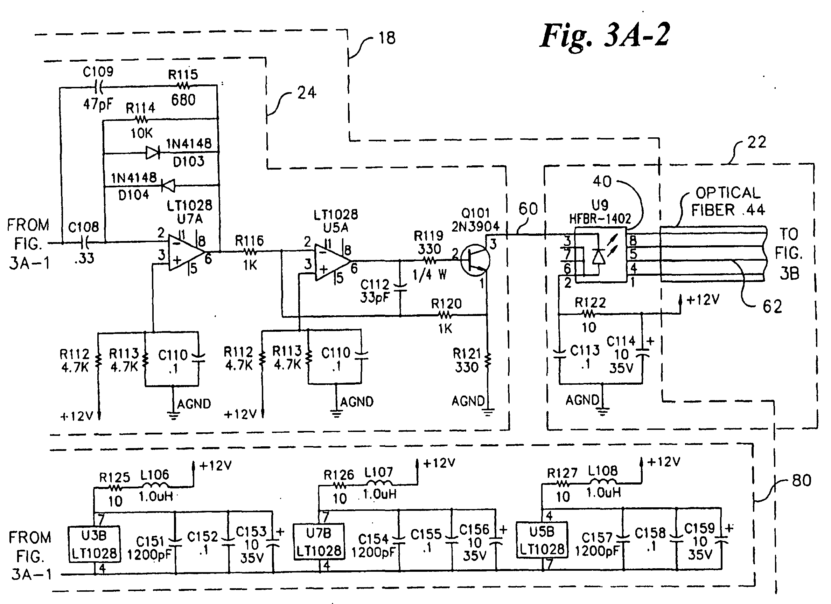

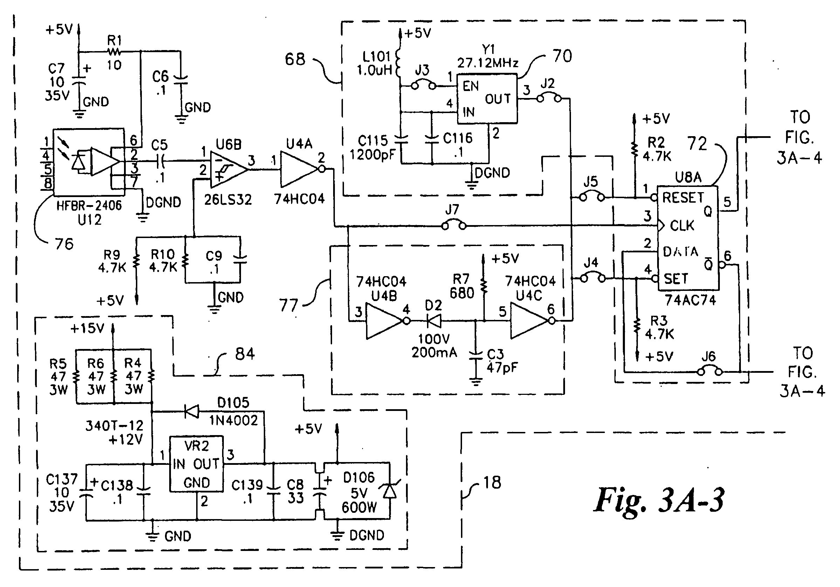

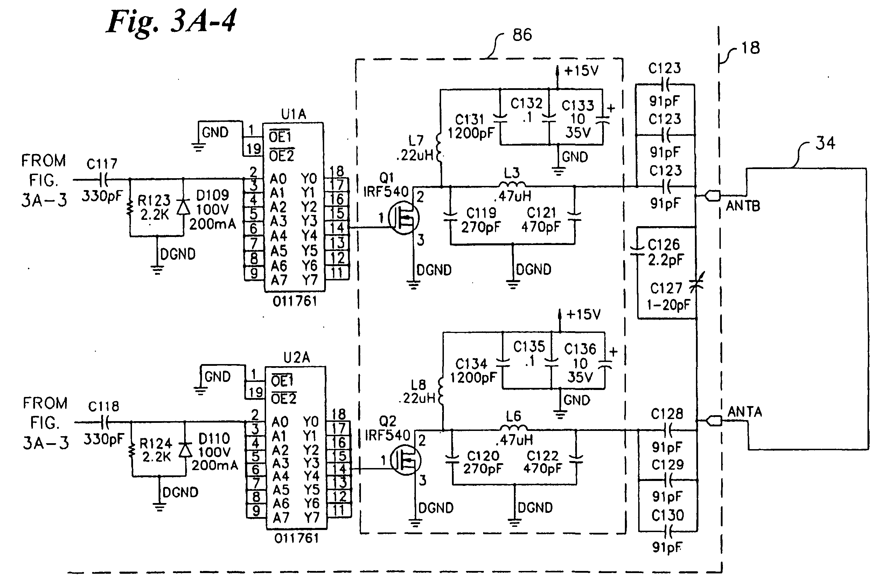

Referring to Fig. 6, the output of the divide by 2 circuit is the Q and *Q̅* outputs of the flip-flop 73. The two outputs have a 180 degree phase difference, and the same frequency, as illustrated in Fig. 7. For simplicity, the Q output is labeled as having a 0 degree phase, and may be referred to as the "non-phase inverted output," and the *Q̅* output is labeled as having a 180 degree phase, and may be referred to as the "phase inverted output." The resultant output thus has a push-pull characteristic. By driving the transmitter antenna 34 with both outputs, the antenna 34 produces a continuous wave signal. A continuous wave signal provides better time opportunities for tag detection compared to a pulsed or burst wave scheme for a transmitter antenna, such as disclosed in Fig. 2 of US-A-4 274 089 which shows transmitter output signals in the pulse mode. Although Fig. 3 of US-A-4 274 089 discloses sending the Q output of a frequency dividing flip-flop to a transmitter of a resonant tag, the *Q̅* output (i.e., phase inverted output) is not sent to the tag transmitter.

One conventional technique to obtain a phase split (push-pull) signal for driving a transmitter antenna to generate a continuous wave signal is to use a transformer. For example, see Fig. 6 of U.S. Patent No. 4,274,089 (Giles) operating in the continuous wave mode. A transformer is an analog device and generates significant noise, thereby defeating the goal of reducing system noise. The present invention maintains the drive signal in digital form as close as possible to the final stage and uses a digital device (flip-flop) to generate the phase split signals, thereby reducing the opportunities for noise to be generated in the system.

Figs. 8 and 9 illustrate how the present invention uses digital signals as close as possible to the final stage to reduce noise in the drive signal circuitry. Fig. 8 is a conventional scheme 90 for driving an RFID transmitter antenna to produce a continuous wave signal. In this scheme, an analog device 92, such as a transformer, produces the phase split signals. The analog output of the transformer is amplified by a resonant circuit driver 94 which accepts an analog input, and the output of the driver is sent to the transmitter antenna 34. Fig. 9 shows the scheme 96 in accordance with the present invention. In this scheme, a digital device, namely one or more flip-flops 74, produces the phase split signals. The digital output of the flip-flop(s) 72 is input to a switched amplifier 98, which may be any suitable Class C, D or E amplifier capable of accepting a digital input. One such amplifier is disclosed in EP-A-1 012 803 an implementation of which is shown in Figs. 3A-1, 3A-2, 3A-3 and 3A-4 (see power driver circuit 86).

A less preferred embodiment of the RFID system 16 which is within the scope of the present invention uses only one output or one phase of the flip-flop 74. This scheme is provides only one-half of the signal voltage for a given input voltage compared to the preferred two phase scheme, but still provides the desired signal noise reduction and the continuous wave.

The RFID system 16 uses an amplitude-modulated response signal. However, other modulation schemes may be used such as frequency modulation, pulse modulation, and phase modulation.

The optical interface disclosed herein is an optical fiber interface. However, other optical or light interface schemes may be used which permit light transmission and receiving of the analog tag response signal over a defined distance.

Although the RFID system described above uses RFID intelligent tags, the noise reduction schemes may be used in RFID systems that employ other types of resonant intelligent tag.

It will be appreciated by those skilled in the art that changes could be made to the embodiments described above without departing from the broad inventive concept thereof. It is understood, therefore, that this invention is not limited to the particular embodiments disclosed, but it is intended to cover modifications within the scope of the present invention as defined by the appended claims.

## Claims

1. A radio frequency identification (RFID) system (16) having a detection zone (30) for detecting the presence of a resonant tag (28) in the detection zone (30), the radio frequency identification system (16) comprising:
a signal generator (68) comprising flip-flop for generating digital transmitter signals; and
a transmitter antenna (34) that emits an electromagnetic signal into the detection zone (30) when driven by transmitter antenna drive signals;
**characterized in that**
a switched amplifier (98) is connected to the signal generator (68) and coupled to the transmitter antenna (34), wherein the digital transmitter signals are passed through the switched amplifier (98) for creating said transmitter antenna drive signals.

2. The RFID system according to claim 1, **characterized in that** the digital transmitter signals comprise a pair of digital signals that are out-of-phase with each other, wherein the switched amplifier (98) comprises:
a respective switch (U1A/U2A) for receiving a respective one of the pair of digital signals, the respective switch (U1A/U2A) being controlled by the logic level of the respective one of the pair of digital signals; and
a respective driver circuit (86) having an input that is coupled to an output of the respective switch (U1A/U2A).

3. The RFID system according to claim 2, **characterized in that** the respective switches (U1A/U2A) comprise solid state switches.

4. The RFID system according to claim 2 or 3, **characterized in that** the respective driver circuits (86) comprise Class E amplifiers.

5. The RFID system according to claim 2 or 3, **characterized in that** the respective driver circuits (86) comprise Class C amplifiers.

6. The RFID system according to claim 2 or 3, **characterized in that** the respective driver circuits (86) comprise Class D amplifiers.

7. The RFID system according to any one of the claims 1 to 6, wherein the radio frequency identification system (16) further comprises:
a receiving antenna (36) coupled to a receiver (24), and
tag response signal analyzing means (20) coupled to the receiver (24),
the tag response signal analyzing means (20) analyzing a signal received by the receiving antenna (36) from the resonant tag (28) and passed from the receiver (24).

8. The RFID system according to claim 7, **characterized in that** the receiver (24) and the tag response signal analyzing means (20) are coupled together via an optical interface (22).

9. The RFID system according to claim 8, **characterized in that** the optical interface (22) comprises:
an optical transmitter (40);
an optical receiver (42); and
an optical fiber (44) connected at one end to an output of the optical transmitter (40) and at another end to an input of the optical receiver (42).

10. The RFID system according to any one of the claims 7 to 9, **characterized in that** the tag response signal is amplitude-modulated.

11. The RFID system according to any one of claims 1 to 10, **characterized in that** the resonant tag (28) is a passive resonant tag.

12. The RFID system according to any one of the claims 1 to 11, **characterized in that** said resonant tag (28) is a radio frequency identification (RFID) tag.

## Patentansprüche

1. Radiofrequenzidentifikations(RFID)-System (16), das eine Erfassungszone (30) zum Erfassen des Vorhandenseins eines Schwingkreisetiketts (28) in der Erfassungszone (30) hat, wobei das Radiofrequenzidentifikationssystem (16) aufweist:
einen Signalgenerator (68) mit einem Flipflop zum Erzeugen von digitalen Sendersignalen; und
eine Senderantenne (34), die ein elektromagnetisches Signal in die Erfassungszone (30) emittiert, wenn sie durch Senderantennentreibersignale angesteuert wird;
**dadurch gekennzeichnet,**
**dass** ein geschalteter Verstärker (98) mit dem Signalgenerator (68) verbunden und mit der Senderantenne (34) gekoppelt ist, wobei die digitalen Sendersignale durch den geschalteten Verstärker (98) hindurchgeleitet werden, um die Senderantennentreibersignale zu erzeugen.

2. RFID-System nach Anspruch 1, **dadurch gekennzeichnet, dass** die digitalen Sendersignale ein Paar Digitalsignale umfassen, die nicht miteinander in Phase sind,
wobei der geschaltete Verstärker (98) aufweist:
einen zugeordneten Schalter (U1A/U2A) zum Empfangen eines zugeordneten Digitalsignals des Digitalsignalpaares, wobei der zugeordnete Schalter (U1A/U2A) durch den Logikpegel des zugeordneten Digitalsignals des Digitalsignalpaares gesteuert wird; und
eine zugeordnete Treiberschaltung (86), die einen Eingang hat, der mit einem Ausgang des zugeordneten Schalters (U1A/U2A) gekoppelt ist.

3. RFID-System nach Anspruch 2, **dadurch gekennzeichnet, dass** die zugeordneten Schalter (U1A/U2A) Festkörperschalter umfassen.

4. RFID-System nach Anspruch 2 oder 3, **dadurch gekennzeichnet, dass** die zugeordneten Treiberschaltungen (86) Klasse-E-Verstärker umfassen.

5. RFID-System nach Anspruch 2 oder 3, **dadurch gekennzeichnet, dass** die zugeordneten Treiberschaltungen (86) Klasse-C-Verstärker umfassen.

6. RFID-System nach Anspruch 2 oder 3, **dadurch gekennzeichnet, dass** die zugeordneten Treiberschaltungen (86) Klasse-D-Verstärker umfassen.

7. RFID-System nach einem der Ansprüche 1 bis 6, wobei das Radiofrequenzidentifikationssystem (16) weiter aufweist:
eine Empfangsantenne (36), die mit einem Empfänger (24) gekoppelt ist, und
eine Etikettantwortsignalanalysiereinrichtung (20), die mit dem Empfänger (24) gekoppelt ist,
wobei die Etikettantwortsignalanalysiereinrichtung (20) ein Signal analysiert, das durch die Empfangsantenne (36) aus dem Schwingkreisetikett (28) empfangen und aus dem Empfänger (24) zugeführt wird.

8. RFID-System nach Anspruch 7, **dadurch gekennzeichnet, dass** der Empfänger (24) und die Etikettantwortsignalanalysiereinrichtung (20) über eine optische Schnittstelle (22) miteinander gekoppelt sind.

9. RFID-System nach Anspruch 8, **dadurch gekennzeichnet, dass** die optische Schnittstelle (22) aufweist:
einen optischen Sender (40);
einen optischen Empfänger (42); und
eine Lichtleitfaser (44), die an einem Ende mit einem Ausgang des optischen Senders (40) und an einem weiteren Ende mit einem Eingang des optischen Empfängers (42) verbunden ist.

10. RFID-System nach einem der Ansprüche 7 bis 9, **dadurch gekennzeichnet, dass** das Etikettantwortsignal amplitudenmoduliert ist.

11. RFID-System nach einem der Ansprüche 1 bis 10, **dadurch gekennzeichnet, dass** das Schwingkreisetikett (28) ein passives Schwingkreisetikett ist.

12. RFID-System nach einem der Ansprüche 1 bis 11, **dadurch gekennzeichnet, dass** das Schwingkreisetikett (28) ein Radiofrequenzidentifikations(RFID)-Etikett ist.

## Revendications

1. Système d'identification par radiofréquences (RFID, pour *« Radio Frequency Identification »)* (16) ayant une zone de détection (30) afin de détecter la présence d'une balise résonante (28) dans la zone de détection (30), le système d'identification par radiofréquences (16) comprenant :
un générateur de signaux (68) comprenant une bascule bistable destiné à produire des signaux numériques à émettre ; et
une antenne d'émission (34) qui émet un signal électromagnétique dans la zone de détection (30) lorsqu'elle est attaquée par des signaux d'attaque d'antenne d'émission ;
**caractérisé en ce qu'**un amplificateur commuté (98) est connecté au générateur de signaux (68) et couplé à l'antenne d'émission (34), les signaux numériques à émettre traversant l'amplificateur commuté (98) afin de créer lesdits signaux d'attaque de l'antenne d'émission.

2. Système RFID selon la revendication 1, **caractérisé en ce que** les signaux numériques à émettre comprennent une paire de signaux numériques qui sont déphasés l'un par rapport à l'autre, l'amplificateur commuté (98) comprenant :
un commutateur respectif (U1A/U2A) destiné à recevoir l'un des deux signaux numériques respectifs, le commutateur respectif (U1A/U2A) étant commandé par le niveau logique de l'un des deux signaux numériques respectifs ; et
un circuit d'attaque respectif (86) ayant une entrée qui est couplée à une sortie du commutateur respectif (U1A/U2A).

3. Système RFID selon la revendication 2, **caractérisé en ce que** les commutateurs respectifs (U1A/U2A) comprennent des commutateurs à semiconducteurs.

4. Système RFID selon la revendication 2 ou 3, **caractérisé en ce que** les circuits d'attaque respectifs (86) comprennent des amplificateurs de classe E.

5. Système RFID selon la revendication 2 ou 3, **caractérisé en ce que** les circuits d'attaque respectifs (86) comprennent des amplificateurs de classe C.

6. Système RFID selon la revendication 2 ou 3, **caractérisé en ce que** les circuits d'attaque respectifs (86) comprennent des amplificateurs de classe D.

7. Système RFID selon l'une quelconque des revendications 1 à 6, dans lequel le système d'identification par radiofréquences (16) comprend en outre :
une antenne de réception (36) couplée à un récepteur (24), et
un moyen d'analyse du signal de réponse de la balise (20) couplé au récepteur (24),
le moyen d'analyse du signal de réponse de la balise (20) analysant un signal reçu par l'antenne de réception (36) en provenance de la balise résonante (28) et transféré par le récepteur (24).

8. Système RFID selon la revendication 7, **caractérisé en ce que** le récepteur (24) et le moyen d'analyse du signal de réponse de la balise (20) sont couplés ensemble par une interface optique (22).

9. Système RFID selon la revendication 8, **caractérisé en ce que** l'interface optique (22) comprend :
un émetteur optique (40) ;
un récepteur optique (42) ; et
une fibre optique (44) connectée par l'une de ses extrémités à une sortie d'un émetteur optique (40) et par l'autre extrémité à une entrée du récepteur optique (42).

10. Système RFID selon l'une quelconque des revendications 7 à 9, **caractérisé en ce que** le signal de réponse de la balise est modulé en amplitude.

11. Système RFID selon l'une quelconque des revendications 1 à 10, **caractérisé en ce que** la balise résonante (28) est une balise résonante passive.

12. Système RFID selon l'une quelconque des revendications 1 à 11, **caractérisé en ce que** ladite balise résonante (28) est une balise d'identification par radiofréquences (RFID).
